# EUROPEAN PATENT APPLICATION

(11) **EP 4 782 903 A1**
(43) Date of publication of application: **29.07.2026**
(21) Application number: 25153619.9
(22) Date of filing: 23.01.2025
(51) Int. Cl.: G02B 21/26, G02B 21/34, G02B 21/36, G01N 21/13, G01N 35/00

(54) **A MICROSCOPY SYSTEM, A METHOD OF MOVING A MICROSCOPE SLIDE, AND A TRANSPORT UNIT**

(71) Applicant: CellaVision AB, 223 62 Lund (SE)
(72) Inventor: Tedenstad, Oscar, 212 52 Malmö (SE); Landin, Robin, 215 85 Malmö (SE); Persson, Jerker, 241 31 Eslöv (SE); Svahn, Mattias, 247 51 Dalby (SE)
(74) Representative: AWA Sweden AB

(57) **Abstract**

The disclosure relates to a microscopy system, a method of moving a microscope slide in a microscopy system, and to a transport unit. The microscopy system (1) comprising an image data capturing unit (6) configured to capture image data of the sample on the microscope slide (60) at the analysis position (AP), and a transport unit (2) configured to move the microscope slide (60) between a receiving position (RP) and the analysis position (AP), wherein the transport unit (2) comprises; a first and a second opposing gripper member (10, 20) having a respective gripping portion (11, 21) being reciprocally movable relative to each other along a first direction (A) to selectively grip the microscope slide (60), and a manoeuvring unit (30) configured to reciprocally move along a second direction (B) between a first, a second, and a third position (P1, P2, P3) such that the transport unit (2) assumes a gripping mode (GM), an open mode (OM), and an ejection mode (EM), respectively.

## Description

### Field of invention

The invention relates to a microscopy system. The invention also relates to a method of moving a microscope slide in a microscopy system. The invention also relates to a transport unit for moving a microscope slide in a microscopy system.

### Technical Background

Microscopes have been a vital instrument for analysing and characterising samples for a long time. In a light microscope, there is typically made use of a transparent microscope slide to hold a sample to be examined. Typically, the sample is illuminated by a light source positioned on one side of the microscope slide and the sample is viewed manually or by a camera through an objective positioned on a side of the microscope slide being opposite the light source. Often a cover glass is placed on top of the sample such that the sample is sandwiched between the microscope slide and the cover glass. The thus prepared microscope slide is then placed and secured on a microscope stage such as by being clamped to the microscope stage. To make is possible to examine different parts of a sample, the microscope slide can be moved relative to the microscope stage and/or the microscope stage can be moved relative to the objective.

It can be laborious and difficult to securely position the microscope slide with precision. After finalised analysis of a sample on a microscope slide, the microscope slide needs to be removed and replaced with a new microscope slide carrying a new sample to be analysed. It can also be difficult to move the microscope slide with good precision. Today there are microscopy systems that can perform these tasks fully or semi-automatically. However, such systems tend to be comparably complicated and tend to require complex control systems. Thus, there is still a need for improvement of the microscopy systems. Thus, there is a need for an improved microscopy system addressing one or more criteria concerning that it should be easy to use, robust, time efficient, energy efficient and having good precision.

### Summary of invention

It is an object of the present invention to provide a solution to the need for an improved microscopy system addressing one or more criteria concerning that it should be easy to use, robust, time efficient, energy efficient and having good precision.

This object has been achieved by a microscopy system comprising; an illumination unit configured to illuminate a sample on a microscope slide positioned at an analysis position, an image data capturing unit configured to capture image data of the sample on the microscope slide at the analysis position, a transport unit configured to move the microscope slide between a receiving position and the analysis position, wherein the transport unit comprises; a first and a second opposing gripper member having a respective gripping portion being reciprocally movable relative to each other along a first direction to selectively grip the microscope slide, and a manoeuvring unit configured to reciprocally move along a second direction between a first, a second, and a third position such that the transport unit assumes a gripping mode, an open mode, and an ejection mode, respectively, wherein the manoeuvring unit comprises a first part of a cam mechanism configured to interact with a second part of a cam mechanism of the first and/or the second gripper member and thereby move the respective gripper portion of the first and second gripper members relative to each other along the first direction, wherein the manoeuvring unit comprises or is connected to a pusher configured to move with the manoeuvring unit and push a microscope slide from the transport unit when the manoeuvring unit is moved into the third position.

The illumination unit may be a light source, such as a microscopy lamp, or may be a light guide, such as a fibre optic illuminator, guiding light from a light source. The light illuminating the sample may be of different wave lengths. The light may e.g., include a broad range of wavelengths, such as all or parts of the visible spectrum. The intensity of the light of different wavelengths may be chosen such that the light is a so-called white light. The intensity of the light of different wavelengths may be chosen such that a certain fraction of the spectrum has a higher or lower intensity than other fractions such that the light differs from a so-called white light. The light may be a so-called mono-chromatic light, such as by being provided by a light diode producing a comparably narrow band light spectrum representing a specific colour. It is also conceivable that the light partly, predominately, or even exclusively includes wavelengths outside the visible spectrum. The light may also be combinations of the lights mentioned above, such as e.g., a white light combined with an intensity peak of light of a certain colour. Basically, the illumination unit may be of any type of illumination source suitable for microscopy.

The image data capturing unit may be configured to capture image data of the sample illuminated by the illumination unit. Preferably, the microscope slide with the sample is moved such that the sample becomes located between the illumination unit and the image capturing unit during analysis. It is also conceivable to use a microscope where the illumination unit and the image capturing unit are placed on the same side of the sample to be analysed. This may, e.g., be relevant for a microscope utilizing backscatter. It may be noted that the image data capturing unit may be configured to capture several images of the sample on the microscope slide at the analysis position. The several images may e.g., be related to different positions of the sample, such as different positions along the major surface of the microscope slide and/or different depths of the sample. The several images may e.g., relate to different times, such as to detect mobility of a living cell or organism or any other kind of change of the sample. The several images may e.g., relate to different settings of the camera and/or objective to capture different data using e.g., different depth of field, different illumination wave lengths, etc. The image data capturing unit may alternatively or complementary capture a video sequence of the sample.

It is to be noted that the analysis position is intended to refer to the position where the sample is located when the sample is illuminated, and image data of the sample is captured. The microscope system may, but need not, include software and processor performing an analysis of the sample. In one embodiment, the microscope system includes software and processor capable of performing a full analysis of the sample. Full analysis of the sample may e.g., relate to an actual count of total number of white blood cells and/or a differential count of the white blood cells according to one or more specific sets of one or more criteria, including e.g., one or more of type, morphology, mobility. Alternatively, part of the analysis may be performed by software and processor of the microscope system and further part of the analysis may be performed by a separate software and processor. The microscope system may e.g., analyse the sample and acquired image data with the purpose of adjusting settings of the microscope and/or the position of the sample such that it retrieves useful image data. The final analysis may e.g., be performed by a separate software and processor, which e.g., can be located nearby or at a remote location. Each of these analysing steps may be performed fully automatically or may alternatively allow or even require involvement of an operator. In any case, the image data used for the actual analysis is in the preferred embodiment retrieved while the sample is in the analysis position.

The receiving position is intended to refer to a position where the transport unit receives a microscope slide. The microscope system may be designed to receive the microscope slide from one or more magazines each supporting a plurality of pre-prepared microscope slides. Typically, such a magazine supports the plurality of microscope slides such that they are arranged in a stack with a small gap between neighbouring slides. Such a magazine may be movable such that different microscope slides are presented one after the other to the transport unit at a specific position. The transport unit may be configured to move to the position of the respective microscope slide in the magazine. Also, combinations of the above is conceivable; it is e.g., conceivable to have a plurality of magazines arranged side by side and that the magazines are movable sideways and that the transport unit is configured to pick microscope slides from different heights of a specific magazine that has been positioned correctly in the sideways direction. Thus, it may be said that the system may include one, two or more receiving positions. The system may receive a first microscope slide in a first receiving position and a second microscope slide at a second receiving position. Alternatively, it may be said that the system includes only one receiving position; the first receiving position, and that the magazine is movable to present the microscope slides one after the other to the receiving position. In any case, irrespective of it is the same position or if there e.g., are different positions, such as at different heights, the position where a specific microscope slide is received by the transport unit is for that cycle or that microscope slide referred to as a receiving position.

The transport unit is configured to receive the microscope slide at the receiving position and to hold it and move it to the analysis position such that the image data capturing unit may capture image data of the sample to be analysed. Preferably the transport unit holds the microscope slide while the image data capturing unit captures image data of the sample on the microscope slide. Thus, the transport unit is configured to move at least back and forth between a receiving position and the analysis position. The movement of the transport unit may be movement in a straight line or any other movement such as being moved in a plane. Further the movement may involve moving up and down as well as in a plane, i.e., the movement may be made in three dimensions. The movement may also include a rotation, but in such a case a rotation will preferably be in a plane. Irrespective of the number of and orientations of the degrees of freedom when it comes to the movement of the transport unit, it is preferred that the microscope slide remains orthogonal to the optical axis, i.e., such that its major surfaces extend orthogonally to the optical axis, at least until the image or images have been captured at the analysis position. For a microscope with a vertically extending optical axis, the microscope slide will remain horizontally oriented, i.e., such that its major surfaces extend horizontally.

The gripping portion of the first and the second gripper member, respectively, may be positioned on each of the gripper member such that the microscope slide is gripped between the respective gripping portions of the first and the second gripper member, when the gripping portions are moved relative to each other along a first direction towards each other. The gripping portion of each of the gripper members may be positioned at an end portion of the respective gripper members. The gripping portion of each of the gripper members may be shaped such that is has two extending forks, such that the first gripper member can grip the microscope slide at two edge portions of a first major surface of the microscope slide and the second gripper member can grip the microscope slide at corresponding edge portions of the second major surface of the microscope slide. Thus, the gripper members may clamp two edge portions of the microscope slide between them and thereby allow a centre portion of the microscope slide to be unaffected by the grip and thereby be presented as suitable for analysis. Each such gripper member may e.g., be said to be U-shaped or V-shaped as seen along a direction forming a normal to a major surface of the microscope slide. However, it is also conceivable that the gripping portions have other shapes. One or more of the gripping portions may e.g., have an extension covering a comparably more central part of the microscope slide. A gripper member shaped like that may be referred to be shaped as fingers, since it may be used to pinch the microscope slide as a human would pinch it with the thumb on one major surface and the index finger on the other major surface of the microscope slide. The gripping portions may be narrow compared to the width of the microscope slide and may be referred to as finger shaped. The gripping portions may be wide such that they cover most or the complete width of the microscope slide and may in such a case be referred to as being panel-shaped or block-shaped, e.g., depending upon the thickness of the gripping portions as measured along a direction formal normal to a major surface of the microscope slide. It is also conceivable to use a combination of the above-mentioned designs. However, it is preferred that the two gripping portions are designed such that they each apply a respective pressure on the respective associated major surfaces basically directly opposite each other. Thereby, the microscope slide is not subjected to any, or at least only marginal, bending or shear forces. It may in this context be noted that the gripping portions of each gripper member may include a material and/or be provided with a coating which e.g., improves the grip and/or cushions the grip. The improved grip may e.g., involve providing a material which increases the friction between the microscope slide and the respective gripping portion. The cushioned grip may e.g., involve a comparably soft, resilient material. Thus, the gripping portions may e.g., be provided with a material such as materials referred to as elastomers, rubbers, plastics, or polymer-based materials providing said improved friction and/or cushioning.

It is to be noted that to achieve the selective gripping of the microscope slide, the gripper members may both move relative each other. However, in the preferred embodiment, one of the two gripper members is stationary with respect to the selective gripping and the other one is movable in the first direction. The gripper members may be moved relative to each other along a straight-line first direction. In the preferred embodiment, the gripper members are articulated relative to each other, preferably at a distance from the gripping portions, such that the gripping portions will move relative each other along an arcuate-shaped first direction. Irrespective of if it is a straight-line or arcuate-shaped first direction, the first direction is preferably oriented such that it forms a major component along, even more preferably coincides with, a direction being normal to the major surface of the microscope slide, at the point when the first and second gripper member is gripping the microscope slide on the first and second opposing major surfaces, respectively. It is also conceivable that the gripper members may grip the microscope slide from two edge sides, i.e., not on the major surfaces. In the preferred embodiment, the first direction is in an upward-downward direction when the system is in use. It may in this context be noted that the microscope slides typically have a thickness in the order of about 1mm. The stroke of the gripping portion of the first gripper member relative to the gripping portion of the second gripper member is typically in the order of about 0,5 to 5mm. It may in this context be noted that the stroke length refers to the difference in the positions of the gripping portion of the first gripper member when in gripping mode compared to when in ejection mode. The gripping portion is typically located at a distance of about 5-15cm from where the gripper members are articulated relative to each other. Thus, the arc length will be in the order of tenth of or even one to the hundreds of the distance to the articulation. That is, it is possible provide a design where the movement will be close to a linear movement but still make it possible to draw benefit from a slight angling of the first gripper member to provide a smooth jaw like entrance opening reducing the risk of the occurrence of a sticky drawer effect.

The manoeuvring unit is preferably positioned between the first and the second gripper members. However, it is conceivable that it alternatively could be positioned at another location, such as beside, above, or below one or both of the first and second gripper members.

Preferably, the second direction is a direction which extends transversely to the first direction, and more preferably the second direction is orthogonal to the first direction. The second direction preferably has at least a major component along a centre direction extending from a base portion towards the gripping portion of the respective gripper member. Preferably, the second direction is parallel to said centre direction of the respective gripper member. Preferably, the centre direction of the gripper member is parallel to a centre direction of the microscope slide, preferably the longitudinal centre direction of the microscope slide. Irrespective of if the second direction is parallel to said centre direction of the respective gripper member, it is preferred that the second direction is parallel to a centre direction of the microscope slide, preferably the longitudinal centre direction of the microscope slide.

The gripping mode is intended to refer to a configuration of the transport unit when the first and second gripper members are relatively close to each other such that the gripping portions of the respective gripper members are both in contact with and gripping the microscope slide. This configuration referred to as gripping mode is accomplished when the manoeuvring unit is in a first position. In one embodiment, the gripper members, or at least at the gripping portion thereof, are biased to move towards each other. Such bias may be provided at least when the transport unit is in the gripping mode such that there is a sufficient force to hold a microscope slide between the gripping portions. Such bias may be provided by a separate biasing member, such as by a resilient member. The resilient member may e.g., be a spring formed of a string of material being resiliently deformable or of a block being resiliently deformable. If the gripping portions are being biased towards each other, it is sufficient for the manoeuvring unit to provide a force separating the gripping portions when the grip is to be released. It is also conceivable that the manoeuvring unit is designed to provide a separation force and a distance between the gripping portions balanced with the thickness of the microscope slide and the material of the gripping portions such that a balanced gripping force of the gripping portions onto the microscope slide is achieved. Alternatively, the manoeuvring unit may actively force the gripper members and gripping portions both towards each other and away from each other to accomplish the selective gripping of the microscope slide. It is also conceivable that the bias towards each other or active forcing is limited to or set at a specific distance where there is an interference fit between the gripping portions and the microscope slide in combination with that the actual clamping force is controlled by the gripping portions being provided with a resilient gripping surface. With such a design it is possible to have a strong biasing or strong active forcing of the position of the first gripper member relative to the second gripper member and still have a comparably limited gripping force. The properties of the gripping surfaces will determine the gripping force based on the interference fit in the gripping position independently of the force by which the gripping members are forced to this set specific distance. In the preferred embodiment, the resilient members will pull the gripper members towards each other, and the manoeuvring unit will act as a mechanical stop setting a specific distance between the gripper members. It may be noted that it is preferred that the springs are biased or pre-loaded such that there is provided a biasing of the gripper members towards each other through-out the movement between the different modes of the transport unit.

The open mode is intended to refer to a configuration of the transport unit when the gripping portions of the respective gripper members are at a distance from each other such that the microscope slide is not gripped by the gripper members. That the gripping portions of the respective gripper members are at a distance from each other preferably also entails that the first and second gripper members are comparably far from each other. This configuration referred to as open mode is accomplish when the manoeuvring unit is in a second position.

The ejection mode is intended to refer to a configuration of the transport unit when the gripping portions of the first and second gripper members are at a distance from each other, and preferably comparably far from each other, such that the microscope slide is not gripped in between the gripper members and where a pusher is at a position such that a microscope slide can be ejected by the pusher moving into and at least partly occupying a space between the gripping portions of the first and second gripper member where a microscope slide otherwise would be positioned. This configuration referred to as ejection mode is accomplish when the manoeuvring unit is in, or is moved towards, a third position.

In the preferred embodiment, the first, second and third position of the manoeuvring unit along the second direction are positioned one after the other in that specific order along the second direction. However, as will become apparent from the description below, the order of the first, the second and the third position along the second direction may be different.

A cam mechanism includes one entity being provided with a cam surface and another entity being provided with a cam surface or a cam follower such that when there is provided a relative movement, such as a translation or rotation, between the two entities in one direction, there is provided a relative movement in another direction. A cam mechanism typically includes a cam surface and a cam follower. In the preferred embodiment, the manoeuvring unit is configured to reciprocally move in a second direction, and thereby it is conceivable to arrange the cam surface and cam follower in a number of different ways on the manoeuvring unit, on the first gripper member, and/or on the second gripper member, respectively. To take these different permutations into account, there is initially made reference to a cam mechanism having a first part and a second part, rather than to specifically refer to one of the parts as a cam surface and to refer to the other part as a cam follower since such specific mentioning would in view of the possible permutations need to involve excessive repetition of the wordings to correctly identify the members involved and an excessive use of "and/or" through-out the description, which in turn would render the description more difficult to understand compared to a straightforward reference to a first and second part of a cam mechanism.

For example, the cam surface can be arranged on one or both of the gripper members while the cam follower is arranged on the manoeuvring unit such that it follows the cam surface on either one of or both of the cam surface/s, or vice versa.

In the preferred embodiment, the manoeuvring unit is provided with a cam surface, the first gripper member is provided with a cam follower, and the second gripper member is provided with a straight-line guide or cam surface along which the manoeuvring unit moves.

By having a first part of a cam mechanism provided on the manoeuvring unit configured to interact with a second part of a cam mechanism on either one or both of the first and second gripper members, the different modes of the transport unit can be assumed by simply moving the manoeuvring unit from one position to another position, i.e. only a single kind of movement of the manoeuvring unit is required for the transport unit to switch between the modes, which makes the process of switching modes straightforward and efficient with low complexity. Thus, the transport unit has been provided with the functionality of switching between receiving, gripping and ejecting a microscope slide by a movement of a single unit, i.e., the manoeuvring unit. This results in an efficient and compact transport unit achieving the desired functionalities.

It is to be noted that the pusher may be movably connected or immovably connected to the manoeuvring unit e.g., the pusher may only move together with the manoeuvring unit, or it may move together and relative the manoeuvring unit. The pusher may alternatively form part of the manoeuvring unit.

Preferably the pusher is pushing the microscope slide completely off of the transport unit, but it is conceivable that the pusher only partly pushes the microscope slide off from the transport unit. The efficiency of ejecting a microscope slide is increased by having the pusher being part of or connected to the manoeuvring unit, utilizing the movement of the manoeuvring unit to move the pusher together, and simultaneously, with the manoeuvring unit.

The first part of the cam mechanism may be a cam surface and the second part of the cam mechanism may be a cam follower, the cam surface preferably being arranged on the manoeuvring unit, and the cam follower preferably being arranged on the first gripper member. This is amongst others convenient from a manufacturing perspective. The manoeuvring unit may e.g., basically be designed from a block with the shape of the cam surface being provided e.g., by milling one side of the block. The manoeuvring unit may be configured to reciprocally move between the first position and third position through the second position.

By arranging the positions such that the manoeuvring unit is moved from the first position to the third position via the second position, the transport unit assumes the open mode between the ejection mode and the closed mode. This is efficient since the transport unit in any case needs to be in the open mode to receive a microscope slide i.e., before entering the gripping mode to grip a microscope slide. It is also favourable for the transport unit to be in the open mode directly prior to being in the ejection mode since the gripping portions needs to be spaced apart a distance away from each other for the microscope slide to be efficiently ejected from the transport unit. This set-up of the order of modes is also favourable in that it decreases the complexity of the cam surface in that the cam surface may have a simple slope; possibly including a plateau. This comparably low complexity cam surface is comparably easy to produce. Such a comparably low complexity cam surface is also comparably easy for the cam follower to follow, whereby the risk of errors or damages to the transport unit are also decreased.

The manoeuvring unit may be positioned between the first and second gripper members and may be slidably and/or rollably movable along a manoeuvring unit guide, preferably a guide track or guide groove, the manoeuvring unit guide preferably extending along a straight line, of the second gripper member extending along said second direction.

By the manoeuvring unit being slidable and/or rollably movable along a manoeuvring unit guide it is facilitated to provide a well-defined movement of the manoeuvring unit. It is also facilitated to provide a low friction and an energy efficient movement of the manoeuvring unit. The manoeuvring unit may be provided with wheels or rollers to make it rollable. Alternatively wheels or rollers may be provided on the second gripper member to allow the manoeuvring unit to be rollably movable along the second direction. There may be a contact surface between the manoeuvring unit and second gripper member for the manoeuvring unit to be slidably movable along the second direction. The contact surface preferably has a comparably low friction or at least limited friction to allow the manoeuvring unit to slide efficiently. It is also conceivable that the manoeuvring unit is slidably movable without having a contact surface between the manoeuvring unit and the second gripper member e.g., if magnetism is used. It is conceivable that the manoeuvring unit is slidably movable, rollably movable, or both slidably and rollably movable. The manoeuvring unit guide may form part of the second gripper member. It is also conceivable that the manoeuvring unit comprises a part e.g., a guide member, configured to interact with the guide track and/or the guide groove such that the guide member is guided along the second direction by the guide track or guide groove. Further by having a manoeuvring unit guide, it is facilitated to provide a correct movement of the manoeuvring unit, since the guide prevents the manoeuvring unit to move in any direction other than the second direction or at least limits the movability in other, non-preferred directions. By the guide extending along a straight line, the complexity of the movement is decreased. Thereby it is facilitated to provide an efficient and precise transport unit and the risk of damages or unwanted movement is decreased.

The first and second gripper members may be interconnected to each other at a fulcrum with the gripping portions being provided at a distance from the fulcrum such that the gripping portions are movable relative to each other along the first direction by a pivoting motion of the first gripper member relative to the second gripper member about the fulcrum.

By having the first and the second gripper member pivoting about the fulcrum, the movement of said gripper members are precise and efficient. Thus, the transport unit can assume the open, ejection and gripping mode in a controlled manner. The fulcrum is preferably positioned relatively close to a respective end of the first and the second gripper member, such that the fulcrum is positioned closer to an end point than to a mid-point of said gripper members. The fulcrum is preferably positioned away from the respective gripping portions of said gripper member such as closer to an opposite side of the respective gripper member preferably along the second direction. It is to be noted that the fulcrum may be a pin or shaft extending through both the first and the second gripper member. It is also conceivable that the fulcrum is part of a hinge connecting said gripper members or that the fulcrum is formed by a protruding part of one of the gripper members interacting with a hole or recess of the other gripper member. As indicated above, the fulcrum is preferably an actual physically fixed pivot axis formed of a protrusion, pin or shaft or the like interacting with a hole or recess or the like. However, it is also conceivable that the fulcrum is formed by shoulders or steps formed in the surfaces of the gripper members facing each other in combination with that the positioning of the gripper members is additionally provided with surrounding structures. The second gripper member could e.g., be provided with a groove or slot into which part of the first gripper member fits such that it is movable in the first direction. In combination e.g., with springs holding the first gripper member in the intended position in the second gripper member, interacting shoulders or steps would work as a fulcrum.

The manoeuvring unit may be, along the second direction, positioned such that the interaction between the first part of the cam mechanism and the second part of the cam mechanism occurs at positions located along the second direction and between the fulcrum and the gripping portions while the manoeuvring unit is moved along the second direction, preferably while the manoeuvring unit is moved along the second direction between all of the first, second, and third positions.

By configuring the interaction between the two cam mechanism parts to occur at a position along the second direction and between the fulcrum and the gripping portions a compact transport unit is achieved. To be noted is that the second cam mechanism is positioned between the fulcrum and the gripping portion on at least one of the gripper members.

The manoeuvring unit may have, at different locations along the second direction, a first portion and a second portion, the first portion being closer to the gripping portions compared to the second portion, wherein the first portion has a first height and the second portion has a second height, the first height being lower compared to the second height such that, as the manoeuvring unit is retracted away from the gripping portions along the second direction, the gripping portions are moved towards each other to assume the gripping mode, and such that, as the manoeuvring unit is moved forward towards the gripping portions along the second direction, the gripping portions are moved from each other to assume the open mode.

In the case where the first cam mechanism is a cam surface i.e., the cam surface is positioned on the manoeuvring unit, it is advantageous for the manoeuvring unit to have a first height at the first portion being lower than a height of the second portion of the manoeuvring unit, especially if the first cam mechanism is a top surface of the manoeuvring unit. This results in a comparably low complexity system. The manoeuvring unit may be provided with or even be provided as the cam surface. Such a cam surface may in itself have a comparably low complexity set-up resulting in the manoeuvring unit being easier to produce and less prone to damages. The manoeuvring unit may have a relatively smooth outline on the side where the cam surface is provided e.g., in a case where the height of the first and second portion of the manoeuvring unit are connected by a slope along the second direction.

The transport unit may further comprise a microscope slide guide member positioned at a microscope slide entrance side of the transport unit, preferably at an entrance portion of the gripping portion of the second gripper member, wherein the microscope slide guide member extends along a geometrical surface having a first extension in a direction being substantially orthogonal to the first and second directions and a second extension being inclined relative to the second direction such that the slide guide member forms, when following the second direction, an entrance which is wide as measured in the first direction and which becomes narrower towards the gripping portion.

It is to be noted that the microscope slide guide member may, in the second extension, extend beyond the second gripper member along the second direction, e.g., be formed as a lip. The microscope slide guide member may facilitate the receiving of a microscope slide by guiding the microscope slide to be received and gripped by the gripper members. The microscope slide guide member will catch and guide the microscope slide towards the gripping portions of the gripper members, in case the alignment for receiving the microscope slide is not optimal and still allow the microscope slide to be received by the transport unit. The microscope slide guide member preferably has a first extension being at least as wide as the microscope slide, which will not only guide the microscope slide but also stabilize the microscope slide when the transport unit receives the microscope slide, limiting unwanted movement and tilting of the microscope slide. However, it is also conceivable that the microscope slide guide member has a first extension being less than the width of the microscope slide as long as its extension is sufficient to stabilize and guide the microscope slide to be received by the transport unit. It may in this context be noted that the microscope slide guide member may be formed of one part or several parts together forming the microscope slide guide member. It is e.g., conceivable to have one comparably narrow part located at one side and another comparably narrow part located at the other side such that the two comparably narrow parts together function as a comparably wide microscope slide guide member.

The guide member may be resiliently flexible and/or resiliently flexibly connected to the transport unit such that the inclination is variable in response to a microscope slide abutting the microscope slide guide.

This kind of guide member will have a comparably gentle function to align the microscope slide.

The transport unit may comprise a motor which is configured to move the manoeuvring unit back and forth along the second direction to thereby both manoeuvre the relative motion of the gripper members and ejecting the microscope slide by the pusher moving with the manoeuvring unit pushing the microscope slide out of the transport unit.

By moving the pusher together with the manoeuvring unit with the same motor it is facilitated to provide an efficient transport unit. It is advantageous that the same motor can be used to configure the transport unit to assume the open mode, the gripping mode as well as the ejection mode, since it reduces cost and complexity.

The transport unit may further comprise one or more sensors configured to detect different positions of the manoeuvring unit along the second direction and thereby detecting which mode among the gripping mode, the open mode, and the ejection mode, the transport unit actually assumes.

It may be noted that this may be accomplished by detecting the position of the manoeuvring unit and/or by detecting the position of a part which moves together with, such as in unison with, the manoeuvring unit. This is advantageous for controlling and knowing when to move the transport unit and/or when to switch the modes of the transport unit. In a preferred embodiment, the motor is provided with an integrated sensor detecting positions of a moving part of the motor in relation to a stationary part of the motor. In a preferred embodiment, the motor may be referred to as a servo motor, such as a linear servo motor.

It is to be noted that the sensor or sensors preferably at least detect the different positions associated with the open mode, gripping mode, and ejection mode. Alternatively, the sensor or sensors may detect the position throughout the movement. Alternatively, the sensor or sensors may detect either a relative movement or position between the first and the second gripper members, or the movement or position of one of the gripper members of which the movement corresponds to the different modes. The sensor or sensors may be one or more of e.g., magnetic sensors, optical sensors, photoelectric sensors, inductive or capacitive proximity sensors, encoders, potentiometers.

The microscopy system may further comprise a support unit configured to receive a slide magazine supporting a plurality of microscope slides, wherein the transport unit may be configured to retrieve a microscope slide from the slide magazine, and preferably also return the microscope slide to the magazine after analysis.

Preferably, the support unit can hold at least one slide magazine, but it may hold more, such as two, three or more than three slide magazines. The support unit is preferable connected to the receiving position such that the transport unit can receive a microscope slide from the magazine at said position. The support unit may actively retrieve a microscope slide from a slide magazine for the transport unit to receive and grip. It is also conceivable that the transport unit retrieves a microscope slide directly from the slide magazine or a combination of both. By having a support unit, microscope slides may be easier to retrieve and returned by the transport unit which leads to a more efficient microscopy system.

The above mentioned object of the invention has also be achieved by a method of moving a microscope slide in a microscopy system from a receiving position to an analysis position, wherein the microscopy system comprises a transport unit comprising a first and a second opposing gripper member having a respective gripping portion being reciprocally movable relative to each other along a first direction to selectively grip the microscope slide, and a manoeuvring unit being reciprocally movable along a second direction between a first, a second and a third position such that the transport unit assumes a gripping mode, an open mode, and an ejection mode, respectively, wherein the manoeuvring unit comprises a first part of a cam mechanism interacting with a second part of a cam mechanism of the first or the second gripper member and thereby moving the respective gripper portion of the first and second gripper members relative to each other along the first direction, wherein the manoeuvring unit comprises or is connected to a pusher moving with the manoeuvring unit, wherein the method comprises; moving the transport unit to a receiving position with the transport unit in the open mode, gripping the microscope slide between the gripping portions of the first and the second gripper member of the transport unit by moving the manoeuvring unit to the first position, moving the transport unit and thereby moving the microscope slide to the analysis position, moving the transport unit and thereby moving the microscope slide from the analysis position to an ejection position, ejecting the microscope slide by moving the manoeuvring unit to the third position such that the gripping portions are moved from each other and releases their grip and such that the pusher is moved and pushes the microscope slide from the transport unit.

The discussion above concerning different variants, preferred embodiments, etc., as well as the advantages associated with the features that were introduced with reference to the microscopy system and the transport unit is equally applicable to the method. The transport unit is in the open mode at least when it has reached the receiving position. Preferably, the transport unit is in the open mode prior to reaching the receiving position. By being in the open mode, the transport unit is readily available to receive a microscope slide directly when reaching the receiving position which results in an efficient method. When the microscope slide has been received by the transport unit, the transport unit assumes the gripping mode, gripping the microscope slide. The microscope slide is preferably continuously gripped by the transport unit from the action of receiving the microscope slide, during analysis, until the action of ejecting the microscope slide at the ejection position. By gripping the microscope sliding during above mentioned actions the method is robust and the risk of dropping a microscope slide is minimal. The ejection position may be the same position as the receiving position, but it may also be another position.

The above mentioned object of the invention has also be achieved by transport unit for use in a microscopy system, the transport unit comprising a first and a second opposing gripper member having a respective gripping portion being reciprocally movable relative to each other along a first direction to selectively grip a microscope slide, a manoeuvring unit configured to reciprocally move along a second direction between a first, a second and a third position such that the transport unit assumes a gripping mode, an open mode, and an ejection mode, respectively, wherein the manoeuvring unit comprises a first part of a cam mechanism configured to interact with a second part of a cam mechanism of the first or the second gripper member and thereby move the gripping portions of the first and second gripper members relative to each other along the first direction, wherein the manoeuvring unit comprises or is connected to a pusher configured to move with the manoeuvring unit and push a microscope slide from the transport unit when the manoeuvring unit is moved into the third position, wherein the transport unit is configured to form part of a microscopy system and to move a microscope slide in the microscopy system, preferably in accordance with the method disclosed above.

The discussion above concerning different variants, preferred embodiments, etc., as well as the advantages associated with the features that were introduced with reference to the microscopy system is equally applicable to the transport unit.

The invention may also in short be said to relate to a microscopy system comprising an image data capturing unit configured to capture image data of the sample on the microscope slide at the analysis position, and a transport unit configured to move the microscope slide between a receiving position and the analysis position, wherein the transport unit comprises; a first and a second opposing gripper member having a respective gripping portion being reciprocally movable relative to each other along a first direction to selectively grip the microscope slide, and a manoeuvring unit configured to reciprocally move along a second direction between a first, a second, and a third position such that the transport unit assumes a gripping mode, an open mode, and an ejection mode, respectively. The system preferably also includes an illumination unit configured to illuminate a sample on a microscope slide positioned at an analysis position. The manoeuvring unit preferably comprises a first part of a cam mechanism configured to interact with a second part of a cam mechanism of the first and/or the second gripper member and thereby move the respective gripper portion of the first and second gripper members relative to each other along the first direction. The manoeuvring unit preferably comprises or is connected to a pusher configured to move with the manoeuvring unit and push a microscope slide from the transport unit when the manoeuvring unit is moved into the third position.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The invention will by way of example be described in more detail with reference to the appended schematic drawings, which shows a presently preferred embodiment of the invention.
Figure 1 discloses a perspective view of the microscopy system.
Figure 2 discloses a perspective view of a transport unit holding a microscope slide.
Figure 3 discloses a perspective view of the transport unit.
Figure 4 discloses an exploded view of the transport unit.
Figure 5a discloses a cross-sectional view of the transport unit as seen along line V-V in figure 3 with the transport unit in gripping mode.
Figure 5b discloses a cross-sectional view of the transport unit as seen along line V-V in figure 3 with the transport unit in open mode.
Figure 5c discloses a cross-sectional view of the transport unit as seen along line V-V in figure 3 with the transport unit in ejection mode.

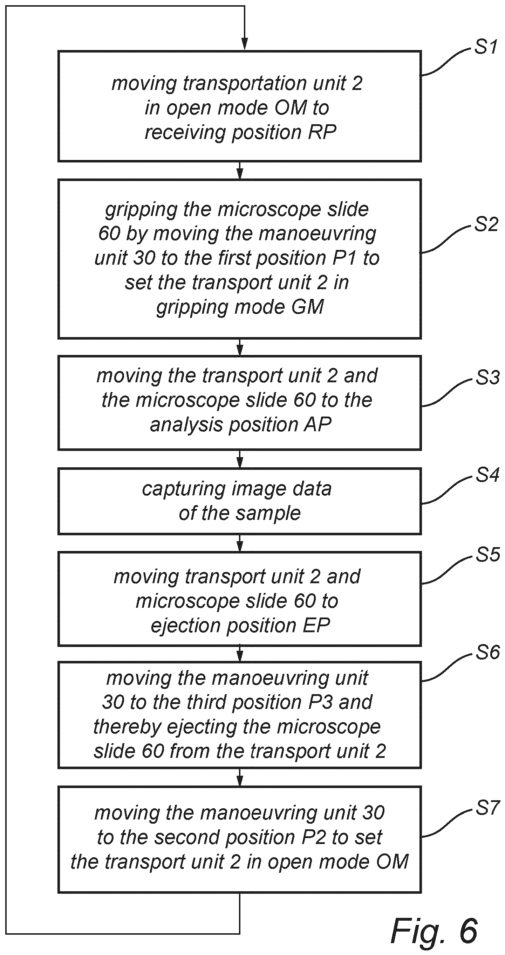

Figure 6 is a schematic block diagram disclosing a method of moving a microscope slide in a microscopy system.

### Detailed description of preferred embodiments

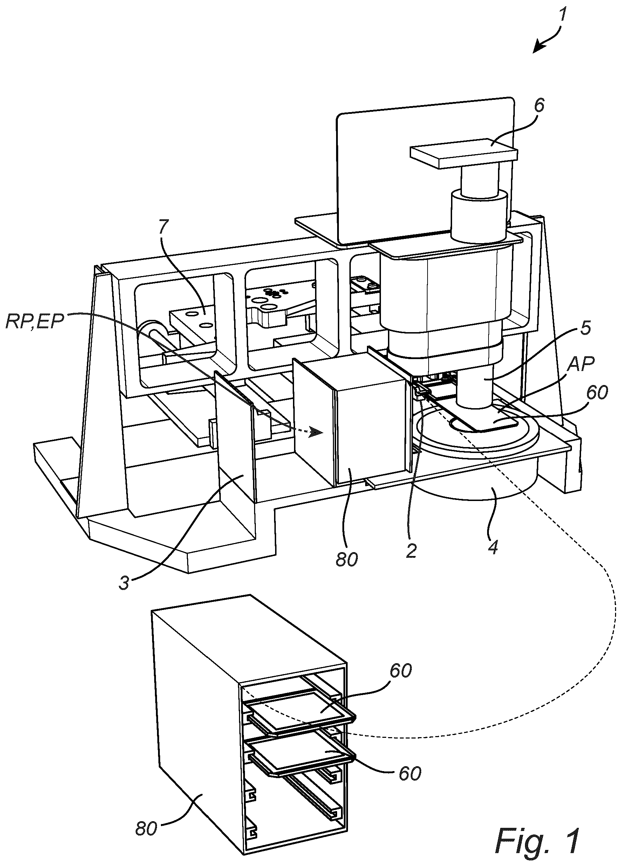

With reference to figure 1 a perspective view of a microscopy system 1 according to the invention is disclosed. A transport unit 2, which will be described further below, for gripping, moving and ejecting a microscope slide 60 is positioned in the microscopy system 1. The transport unit 2 receives a microscope slide 60 with a sample thereon at a receiving position RP. When in the receiving position, the transport unit 2 receives a microscope slide 60 from a magazine 80. The magazine 80 holds and can supply microscope slides 60. The magazine 80 is placed in a support unit 3 of the microscopy system 1. The support unit 3 preferably can hold several magazines. An alternative, not shown in the figures, is an external system that supplies the microscopy system with microscope slides or magazines with microscope slides.

The microscopy system 1 further comprises an illumination unit 4 which is configured to illuminate a sample. In the embodiment disclosed in the drawings, the illumination unit 4 is positioned underneath the position where the microscope slide is positioned when analysis is to be performed. The microscope system 1 also comprises optics 5 and an image data capturing unit 6. In the embodiment disclosed in the drawings, the optics 5 is located above the position where the microscope slide is positioned when analysis is to be performed and the image data capturing unit 6 is configured to capture image data of the sample based on light that has passed from the illumination device 4, through the sample on the microscope slide, through the optics 5 and to the image data capturing unit 6. In the disclosed embodiment, the image data capturing unit 6 is located above the optics 5.

The transport unit 2 is configured to receive a microscope slide 60 at the receiving position RP, move the microscope slide 60 to the analysis position AP, and to move it to the ejection position EP. In the disclosed embodiment, the transport unit 2 is configured to return to basically the same position when in the ejection position EP as in the receiving position RP. This is especially useful in case the microscope system 1 is configured to return the analysed microscope slide 60 to the same magazine 80 as it was retrieved from.

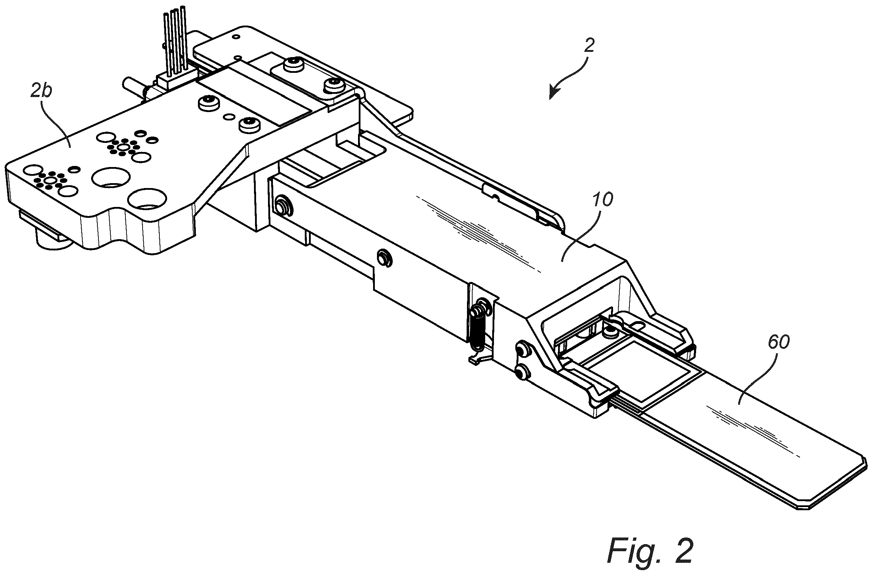

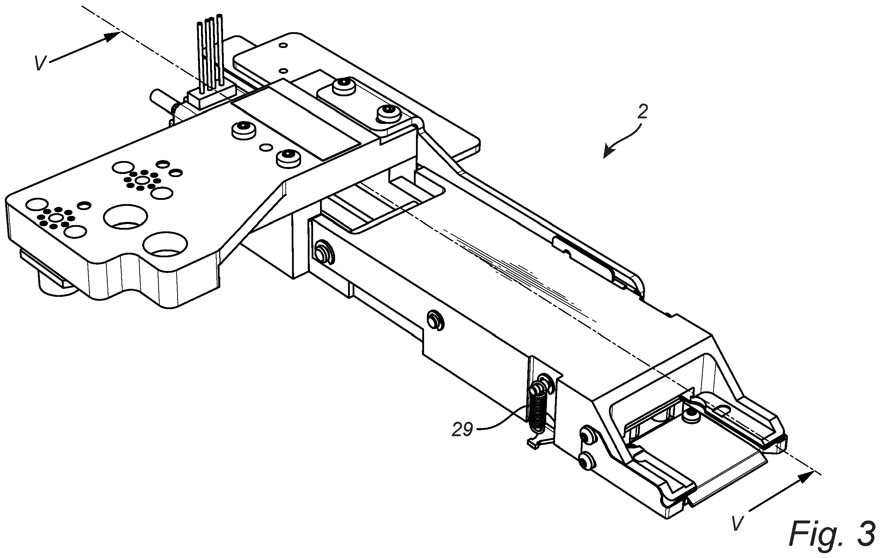

With reference to figures 2-4 and 5a-c, an embodiment of the transport unit 2 is shown. The transport unit 2 comprises in short, a first gripper member 10, a second gripper member 20, and a manoeuvring unit 30. The first and a second gripper members 10, 20 are arranged opposite each other and they, or at least parts thereof, are reciprocally movable relative to each other along a first direction A to selectively grip the microscope slide 60.

The first gripper member 10 has an extension in a second direction B being transverse to the first direction A. At an end portion of the first gripper member 10 there is provided a gripping portion 11. Similarly, the second gripper member 20 has an extension in the second direction B and at an end portion of the second gripper member 20 there is provided a gripping portion 21. In the preferred embodiment, the first and second gripper members 10, 20 are connected to each other via a fulcrum 40 such that the first gripper member 10 can pivot relative to each other around the fulcrum 40, moving the gripping portion 11 of the first gripper member 10 relative the gripping portion 21 of the second gripper member 20 in the first direction A. In the preferred embodiment, the second gripper member 20 may be seen as part of the fixed structure of the transport unit 2. The transport unit 2 is provided with a mounting plate 2b which in turn is fixedly attached to a movable x-y-stage 7. The x-y-stage 7 is configured to move the transport unit 2 in the x and y direction which typically is referred to as defining a plane orthogonal to the optical axis of the microscopy system 1. The x-y-stage 7 may be of any conventional kind. It may e.g., be designed with a system of threaded rods attached to the support of the microscopy system and with threaded nuts attached to the x-y-stage 7. There is provided at least one set of rods and nuts extending in the x-direction and at least one set of rods and nuts extending in the y-direction. The threaded nuts and/or the threaded rods are motor-rotatable such that the x-y-stage 7 can be moved in both the x- and y-direction, preferably independently in the x-direction and y-direction, respectively. The mounting plate 2b may be tiltable relative to the x-y-stage and/or the part of the transport unit 2 including the first and second gripper members 10, 20 may be tiltable relative to the mounting plate 2b.

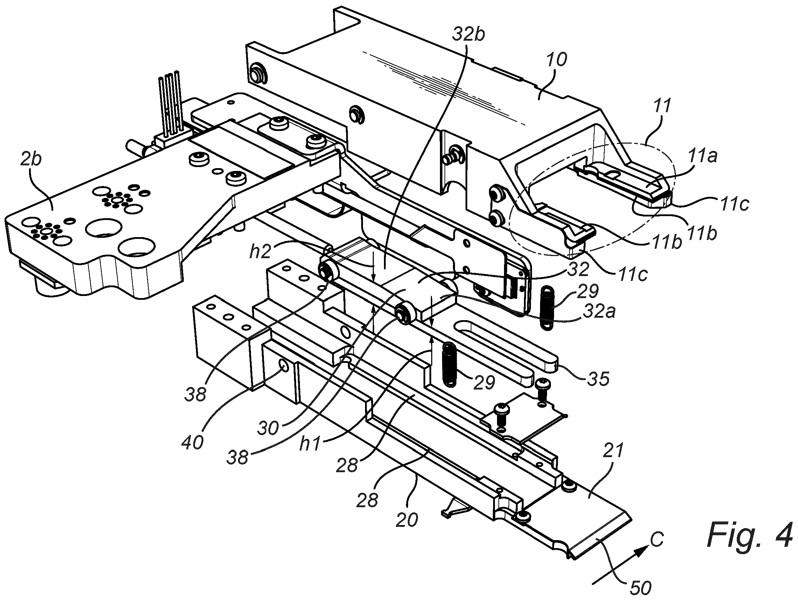

As is best shown in figure 4, the gripping portion 11 of the first gripper member 10 is provided in a U-shape configured to grip the microscope slide 60 at the edges of a major upper surface thereof. The second gripper member 20 is positioned below the first gripper member 10 as seen along the first direction A. The gripping portion 21 of the second gripper member 20 is positioned below the gripping portion 10 of the first gripper member such that the microscope slide 60 can be gripped between the gripping portions 11,21 of the first and the second gripper members 10,20; as is best shown in figure 2. As is also best shown in figure 4, in the preferred embodiment, the gripping portion 11 of the first gripper member 10 is essentially U-shaped or fork-shaped with two fingers 11a extending in the second direction B. The gripper portion 21 of the second gripper member 20 is in this embodiment shaped as a plate. The fingers 11a are provide with downwardly facing surfaces 11b. The microscope slide 60 is configured to be clamped between the downwardly facing surfaces 11b of the fingers 11a and the plate shaped gripper portion 21. The fingers 11a are also provided with downwardly extending protrusions 11c which are located outwardly of the downwardly facing surfaces 11b. These downwardly extending protrusions 11c may have a distance between them which only marginally exceed the width of the microscope slide 60 and may thereby act as a guide aiding in positioning the microscope slide 60 correctly in the direction C.

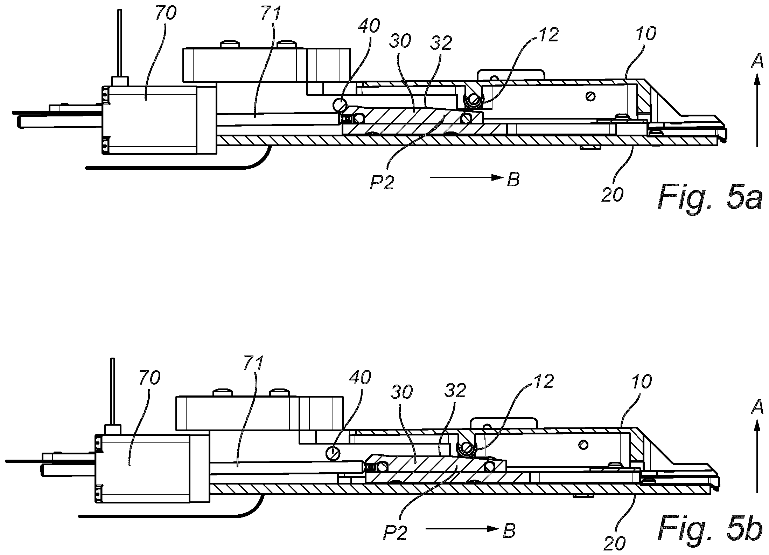

At an end portion of the gripping portion 21 of the second gripper member 20, a microscope slide guide member 50 is provided. The microscope slide guide member 50 extends from the second gripping portion 21 with a component along the second direction B but slightly inclined downwardly. The microscope slide guide member 50 also has an extension in a direction C which is orthogonal to the first direction A and the second direction B, and which is a direction projecting out of the viewing plane of figures 5a-c. This direction is the same direction as a width direction of the microscope slide 60, when the slide is received in the transport unit 2. The microscope slide guide member 50 is inclined relative the second direction to form an entrance between the slide guide member 50 and the gripping portion 11 of the first gripper member 10. The entrance narrows when moving along the second direction B towards the transport unit 2, the slide guide member 50 thereby aiding in guiding the microscope slide 60 to be positioned between the gripping portions 11, 21 of the first and the second gripper member 10, 20. The microscope slide guide member 50 is resiliently flexible and/or resiliently flexibly connected to the transport unit 2 such that the inclination is variable in response to a microscope slide 60 abutting the microscope slide guide member 50. The microscope slide guide member 50 may e.g., be formed of flexible plastic material. The microscope slide guide member 50 may e.g., be formed as a brush of flexible hairs.

The manoeuvring unit 30 comprises a first part of a cam mechanism configured to interact with a second part of a cam mechanism of the first and/or the second gripper member 10, 20 and thereby move the respective gripper portion 11, 21 of the first and second gripper members 10, 20 relative to each other along the first direction A. In the preferred embodiment, the second part of the cam mechanism is provided as a wheel 12 on the first gripper member 10. The wheel 12 is positioned between the gripping portion 11 and the fulcrum 40 as seen along the second direction B.

The manoeuvring unit 30 is provided between the first and the second gripper member 10, 20 as seen along the first direction A. The manoeuvring unit 30 is positioned between the fulcrum 40 and the gripping portions 11,21 of the first and the second gripper member 10,20 as seen along the second direction B. The manoeuvring unit 30 is provided with the first part of the cam mechanism which in the preferred embodiment is a cam surface 32. The cam surface 32 forms part of the manoeuvring unit 30, such as by being a top surface of said unit 30. The cam surface 32 may be integrally formed with a body of the manoeuvring unit 30 or may be separately formed and attached to the body of the manoeuvring unit 30. The cam surface 32 is, when the system is in use, interacting with the second part of the cam mechanism, namely the cam follower 12 of the first gripper member 10. The interaction of the cam mechanism occurs, due to the positioning of the cam mechanism parts, between the fulcrum 40 and the gripping portion 11,21 as seen along the first direction A. The manoeuvring unit 30 is movable along the second gripper member 20. In the preferred embodiment, the second gripper member 20 is provided with a manoeuvring unit guide 28. As is best shown in figure 4, this manoeuvring unit guide 28 is basically formed of two straight surfaces which may be said to form a track. The manoeuvring unit 30 is provided with wheels 38 to be rollably movable along the second direction B. Other functional designs, such as the manoeuvring unit 30 being slidable along the manoeuvring unit guide 28 is also conceivable. Independently of if the manoeuvring unit 30 is e.g., rollable or slidable, also other geometrical designs, such as the manoeuvring unit guide 28 being formed as a guide groove is conceivable.

The cam surface 32 has at a first portion 32a thereof a first height h1 as seen in the first direction A. The cam surface 32 has at a second portion 32b thereof a second height h2 as seen in the first direction A. The second height h2 is greater than the first height h1. The first portion 32a is located closer to the gripping portions 11, 21 than the second portion 32b as seen along the second direction B.

The different heights h1, h2 of the first and second portions 32a-b outlines the cam surface 32 and since the position of the manoeuvring unit 30 along the first direction A is fixed relative to the second gripper member 20, different positioning of the manoeuvring unit 30 along the second gripper member 20 will provide different heights h1, h2 of the manoeuvring unit 30 being sandwiched between the first and second gripper members 10, 20. In order to keep the cam arrangement with the first gripper member 10, the manoeuvring unit 30 and the second gripper member 20 together and in contact with each other, the transport unit 2 is provided with springs 29 which bias the first and second gripper members 10, 20 towards each other.

The manoeuvring unit 30 also comprises a pusher 35. The pusher 35 is formed as an elongated member and is attached to or forms part of the manoeuvring unit 30. The pusher 35 has an extension in the second direction B from the portion of the manoeuvring unit 30 being provided with the cam surface 32 such that the pusher 35 is comparably closer to the gripping portions 11, 21 as seen along the second direction B. In the preferred embodiment, the pusher 35 is designed as a fork-shaped elongated member.

The manoeuvring unit 30 is connected to a motor 70 via a motor shaft 71 such that the manoeuvring unit 30 can be moved along the second direction B both away from and towards the gripping portions 11, 21. Alternatively expressed, the manoeuvring unit 30 is movable back and forth along the manoeuvring unit guide 28. The motor 70 moves the motor shaft 71 along the second direction B thereby moving the manoeuvring unit 30 along the second direction B.

By moving the manoeuvring unit 30, the different portions 32a-b of the cam mechanism surface 32 interacts with the cam follower 12 and the transport unit 2 assumes the gripping mode GM, the open mode OM and the ejection mode EM depending on which position the manoeuvring unit 30 is in. The manoeuvring unit 30 can be moved to at least a first, a second, and a third position (P1, P2, P3).

The first position P1 of the manoeuvring unit 30 is shown in figure 5a, where the transport unit 2 is in the gripping mode GM. In the first position P1, the manoeuvring unit 30 is positioned furthest away from the gripping portions 11, 21, compared to said first second and third positions as seen along the second direction B. The manoeuvring unit 30 is positioned such that the first portion 32a of the cam surface 32 is interacting with the cam follower 12 whereby the gripping portions 11,21 of the gripper members 10, 20 are comparably close to each other so that the gripping portions 11, 21 are able to grip the microscope slide 60 between them. The pusher 35 is positioned retracted away from the gripping portions 11, 21 such that it does not interact with the microscope slide 60. Thus, the transport unit 2 is in the gripping mode GM.

The second position P2 of the manoeuvring unit 20 is shown in figure 5b, where the transport unit 2 is in the open mode OM. In the second position P2, the manoeuvring unit 30 is positioned closer to the gripping portions 11, 21 compared to the first position P1 as seen along the second direction B. The manoeuvring unit 30 is positioned such that the second portion 32b of the cam surface 32 is interacting with the cam follower whereby the gripping portions 11,21 of the gripper members 10, 20 are compared to the gripping mode GM comparably far away from each other so that the gripping portions 11, 21 does not grip the microscope slide 60 between them. The pusher 35 is positioned closer to the gripping portions 11, 21 compared to first position P1 but it is still retracted away from the gripping portions 11, 21 such that it does not interact with the microscope slide 60. Thus, the transport unit 2 is in the open mode OM.

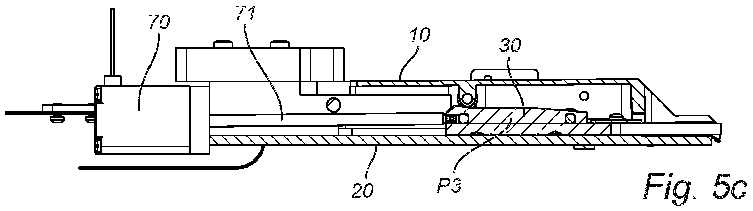

The third position of the manoeuvring unit 20 is shown in figure 5c, where the transport unit 2 is in the ejection mode EM. In the third position P3, the manoeuvring unit 30 is positioned closer to the gripping portions 11, 21 compared to the second position P2 as seen along the second direction B. The manoeuvring unit 30 is positioned such that the second portion 32b of the cam surface 32 is interacting with the cam follower 12 whereby the gripping portions 11, 21 of the gripper members 10, 20 are comparably far away from each other so that the gripping portions 11, 21 does not grip the microscope slide 60 between them. In this third position P3, the pusher 35 has been moved forward to a position between the gripping portions 11, 21 such that it occupies a space where otherwise the microscope slide 60 would be positioned in the gripping mode. Thus, the transport unit 2 is in the ejection mode EM. It may in this context be noted that the second portion 32b of the cam surface 32 has an extension along the second direction B being sufficient for the manoeuvring unit 30 to be both in the second and third positions P2, P3 with the second portion 32b of the cam surface 32 still being in contact with the follower 12 in both these positions P2, P3. It may also be noted that the heights h1 and h2 does not necessarily need to be constant through-out the extension of the respective portion 32a, 32b along the second direction. It is e.g., conceivable to have a first portion 32a which is more or less just a single position where there is a height h1. It is e.g., conceivable to have a second portion 32b including a slope where the height smoothly increases from the first height h1 to the second height h2. When the manoeuvring unit 30 is to be moved to the third position P3, the height of the cam surface 32 may remain at the second height h2 or may increase even further. It is e.g., conceivable that the cam surface 32 has a constant second height h2 from the second position P2 to the third position P3. It is also conceivable to have a comparably short slope close to the third position P3 and a greater height h3 at the third position P3. Such a design may be useful to facilitate the final stage of the ejection of the microscope slide 60. Complementary or alternatively thereto, such a slope towards, at, or even after, the third position P3 may also act as a smooth stop facilitating to stop the manoeuvring unit 2 smoothly at the third position P3. The movement to the third position P3 may complementary be stopped, or alternatively be stopped solely, by the motor 70. The movement to the third position P3 may alternatively or complementary be stopped by stop shoulders in the manoeuvring unit guide 28. It may in this context be noted that the position of the manoeuvring unit 30 may be detected with the use of a magnetic strip on the manoeuvring unit 30 and an encoder 75 positioned alongside the path of movement of the manoeuvring unit 30. It is also conceivable to detect the relative position of the first gripper member 10 relative to the second gripper member 20 along the first direction A with a similar arrangement with a magnetic strip and encoder.

An embodiment of the method for moving the transport unit 2 is described below. The transport unit 2, being in the open mode OM, is moved S1 to the receiving position RP where the transport unit 2 is configured to receive a microscope slide from the magazine 80. It may be noted that the transport unit 2 only need to be set in the open mode OM just before it about the receive the microscope slide 60. However, preferably the transport unit 2 is moved from the ejection mode EM to the open mode OM at the ejection position EP or while being moved from the ejection position EP where the previous microscope slide 60 was ejected, such that the transport unit 2 is in the open mode OM well in advance before reaching the receiving position RP.

The microscope slide 60 is preferably already at the position RP to be received by the transport unit 2. That is, it is preferred that the transport unit 2 is set in open mode OM and is moved relative to the microscope slide 60 such that the gripping portions 11, 21 becomes positioned in the intended gripping position relative to the microscope slide 60. However, it is conceivable that part of the movement is performed by moving the microscope slide 60 as such or by moving the magazine 80 in which the microscope slide 60 may be located. The microscope slide 60 is provided with a sample to be analysed.

Next, the manoeuvring unit 20 moves S2 from the second position P2 to the first position P1, such that the transport unit 2 assumes the gripping mode GM. The gripping portions 11, 21 thereby moves relative to and towards each other and the gripping portions 11, 21 grip the microscope slide 60 between them.

With the microscope slide 60 gripped between the gripping portions 11, 21, the transport unit 2 moves S3 to the analysis position AP. At the analysis position AP, the sample on the microscope slide 60 can be illuminated by the illumination unit 4. While the sample is being illuminated, the image data capturing unit 6 captures S4 image data of the sample. In the preferred embodiment, the gripping portions 11, 21 maintains its grip of the microscope slide 60 during the analysis. The transport unit 2 may be movable in one or more of the x, y, and z directions while still being said to be at the analysis position AP. However, it is also conceivable that the gripping portions 11, 21 temporarily releases its grip of the microscope slide 60 and that the microscopy system 1 further includes a positioning device temporarily controlling the position and/or movement in one or more the x, y, and z directions of the microscope slide 60 during the analysis.

When the analysis is completed, the transport unit 2 moves S5 to the ejection position EP and thereby the microscope slide 60 gripped between the gripping portions 11, 21 will also be moved to the ejection position EP.

After arriving at the ejection position EP, the transport unit 2 assumes the ejection mode EM by the manoeuvring unit 30 being moved S6 from the first position P1, via the second position P2, to the third position P3. Thus, the gripping portions 11, 21 will move away from each other such that the microscope slide 60 is able to move away from the transport unit 2. Simultaneously, the pusher 35 is moved along the second direction B, and when the manoeuvring unit 20 is moving into the third position P3, the pusher 35 moves into a position between the gripping portions 11, 21 where the microscope slide 60 is positioned. Thereby, the pusher 35 pushes the microscope slide 60 out from the transport unit, i.e., the microscope slide 60 is ejected from the transport unit 2. The microscope slide 60 may be ejected such that it is again received in the magazine 80, alternatively received in another magazine, or even ejected into a bin, to be discarded.

After the microscope slide 60 has been ejected, the manoeuvring unit 30 may then move S7 to the second position P2, configuring the transport unit to assume the open mode OM and another cycle of analysis may be performed.

Even though it is preferred that the microscopy system is designed in accordance with the disclosure in the detailed disclosure of preferred embodiments and the appended drawings, it should be noted that a specific preferred embodiment of a specific component does not necessarily have to be combined with a specific embodiment of another component. Thus, advantages associated with a specific embodiment, including one or more features of a specific component, may be accomplished even though the other components are designed in accordance with the more general disclosure under the summary of the invention rather than being defined in accordance with the specific embodiment disclosed in the detailed description. It is contemplated that there are numerous modifications of the embodiments described herein, which are still within the scope of the invention as defined by the appended claims.

## Claims

1. Microscopy system (1) comprising
an illumination unit (4) configured to illuminate a sample on a microscope slide (60) positioned at an analysis position (AP),
an image data capturing unit (6) configured to capture image data of the sample on the microscope slide (60) at the analysis position (AP),
a transport unit (2) configured to move the microscope slide (60) between a receiving position (RP) and the analysis position (AP),
wherein the transport unit (2) comprises
a first and a second opposing gripper member (10, 20) having a respective gripping portion (11, 21) being reciprocally movable relative to each other along a first direction (A) to selectively grip the microscope slide (60), and
a manoeuvring unit (30) configured to reciprocally move along a second direction (B) between a first, a second, and a third position (P1, P2, P3) such that the transport unit (2) assumes a gripping mode (GM), an open mode (OM), and an ejection mode (EM), respectively,
wherein the manoeuvring unit (30) comprises a first part (32) of a cam mechanism configured to interact with a second part (12) of a cam mechanism of the first and/or the second gripper member (10, 20) and thereby move the respective gripper portion (11, 21) of the first and second gripper members (10, 20) relative to each other along the first direction (A),
wherein the manoeuvring unit (30) comprises or is connected to a pusher (35) configured to move with the manoeuvring unit (30) and push a microscope slide (60) from the transport unit (2) when the manoeuvring unit (30) is moved into the third position (P3).

2. Microscopy system according to claim 1, wherein the first part of the cam mechanism is a cam surface (32), and the second part of the cam mechanism is a cam follower (12), the cam surface (32) preferably being arranged on the manoeuvring unit (30), and the cam follower (12) preferably being arranged on the first gripper member (10).

3. Microscopy system according to claim 1 or 2, wherein the manoeuvring unit (30) is configured to reciprocally move between the first position (P1) and third position (P3) through the second position (P2).

4. Microscopy system according to any one of claims 1-3, wherein the manoeuvring unit (30) is positioned between the first and second gripper members (10, 20) and is slidably and/or rollably movable along a manoeuvring unit guide (28), preferably a guide track or guide groove (28), the manoeuvring unit guide (28) preferably extending along a straight line, of the second gripper member (20) extending along said second direction (B).

5. Microscopy system according to any one of claims 1-4, wherein the first and second gripper members (10, 20) are interconnected to each other at a fulcrum (40) with the gripping portions (11, 21) being provided at a distance from the fulcrum (40) such that the gripping portions (11, 21) are movable relative to each other along the first direction (A) by a pivoting motion of the first gripper member (10) relative to the second gripper member (20) about the fulcrum (40).

6. Microscopy system according to any one of claim 5, wherein the manoeuvring unit (30) is, along the second direction (B), positioned such that the interaction between the first part (32) of the cam mechanism and the second part (12) of the cam mechanism occurs at positions located along the second direction (B) and between the fulcrum (40) and the gripping portions (11, 21) while the manoeuvring unit (30) is moved along the second direction (B), preferably while the manoeuvring unit (30) is moved along the second direction (B) between all of the first, second, and third positions (P1, P2, P3).

7. Microscopy system according to any one of claims 1-6, wherein the manoeuvring unit (30) has, at different locations along the second direction (B), a first portion (32a) and a second portion (32b), the first portion (32a) being closer to the gripping portions (11, 21) compared to the second portion (32b), wherein the first portion (32a) has a first height (h1) and the second portion (32b) has a second height (h2), the first height (h1) being lower compared to the second height (h2) such that, as the manoeuvring unit (30) is retracted away from the gripping portions (11, 21) along the second direction (B), the gripping portions (11, 21) are moved towards each other to assume the gripping mode (GM), and such that, as the manoeuvring unit (30) is moved forward towards the gripping portions (11, 21) along the second direction (B), the gripping portions (11, 21) are moved from each other to assume the open mode (OM).

8. Microscopy system according to any one of claims 1-7, wherein the transport unit (2) further comprises a microscope slide guide member (50) positioned at a microscope slide entrance side of the transport unit (2), preferably at an entrance portion of the gripping portion (21) of the second gripper member (20), wherein the microscope slide guide member (50) extends along a geometrical surface having a first extension in a direction (C) being substantially orthogonal to the first and second directions (A, B) and a second extension being inclined relative to the second direction (B) such that the microscope slide guide member (50) forms, when following the second direction (B), an entrance which is wide as measured in the first direction (A) and which becomes narrower towards the gripping portion (21).

9. Microscopy system according to claim 8, wherein the microscope slide guide member (50) is resiliently flexible and/or resiliently flexibly connected to the transport unit (2) such that the inclination is variable in response to a microscope slide (60) abutting the microscope slide guide member (50).

10. Microscopy system according to any one of claims 1-9, wherein the transport unit (2) comprises a motor (70) which is configured to move the manoeuvring unit (30) back and forth along the second direction (B) to thereby both manoeuvre the relative motion of the gripper members (11, 21) and ejecting the microscope slide (60) by the pusher (35) moving with the manoeuvring unit (30) pushing the microscope slide (60) out of the transport unit (2).

11. Microscopy system according to any one of claims 1-10, wherein the transport unit (2) further comprises one or more sensors (75) configured to detect different positions of the manoeuvring unit (30) along the second direction (B) and thereby detecting which mode among the gripping mode (GM), the open mode (OM), and the ejection mode (EM), the transport unit (2) actually assumes.

12. Microscopy system according to any one of claims 1-11, further comprising a support unit (3) configured to receive a slide magazine (80) supporting a plurality of microscope slides (60),
wherein the transport unit (2) is configured to retrieve a microscope slide (60) from the slide magazine (80), and preferably also return the microscope slide (60) to the slide magazine (80) after analysis.

13. Method of moving a microscope slide (60) in a microscopy system (1) from a receiving position (RP) to an analysis position (AP), wherein the microscopy system (1) comprises
a transport unit (2) comprising a first and a second opposing gripper member (10, 20) having a respective gripping portion (11, 21) being reciprocally movable relative to each other along a first direction (A) to selectively grip the microscope slide (60), and
a manoeuvring unit (30) being reciprocally movable along a second direction (B) between a first, a second and a third position (P1, P2, P3) such that the transport unit (2) assumes a gripping mode (GM), an open mode (OM), and an ejection mode (EM), respectively,
wherein the manoeuvring unit (30) comprises a first part (32) of a cam mechanism interacting with a second part (12) of a cam mechanism of the first or the second gripper member (10, 20) and thereby moving the respective gripper portion (11, 21) of the first and second gripper members (10, 20) relative to each other along the first direction (A),
wherein the manoeuvring unit (30) comprises or is connected to a pusher (35) moving with the manoeuvring unit (30),
wherein the method comprises
moving the transport unit (2) to a receiving position (RP) with the transport unit (2) in the open mode (OM),
gripping the microscope slide (60) between the gripping portions (11, 21) of the first and the second gripper members (10, 20) of the transport unit (2) by moving the manoeuvring unit (30) to the first position (P1),
moving the transport unit (2) and thereby moving the microscope slide (60) to the analysis position (AP),
moving the transport unit (2) and thereby moving the microscope slide (60) from the analysis position (AP) to an ejection position (EP),
ejecting the microscope slide (60) by moving the manoeuvring unit (30) to the third position (P3) such that the gripping portions (11, 21) are moved from each other and releases their grip and such that the pusher (35) is moved and pushes the microscope slide (60) from the transport unit (2).

14. Transport unit (2) for use in a microscopy system (1), the transport unit (2) comprising
a first and a second opposing gripper member (10, 20) having a respective gripping portion (11, 21) being reciprocally movable relative to each other along a first direction (A) to selectively grip a microscope slide (60),
a manoeuvring unit (30) configured to reciprocally move along a second direction (B) between a first, a second and a third position (P1, P2, P3), such that the transport unit assumes a gripping mode (GM), an open mode (OM), and an ejection mode (EM), respectively,
wherein the manoeuvring unit (30) comprises a first part (32) of a cam mechanism configured to interact with a second part (12) of a cam mechanism of the first or the second gripper member (10, 20) and thereby move the gripping portions (11, 21) of the first and second gripper members (10, 20) relative to each other along the first direction (A),
wherein the manoeuvring unit (30) comprises or is connected to a pusher (35) configured to move with the manoeuvring unit (30) and push a microscope slide (60) from the transport unit (2) when the manoeuvring unit (30) is moved into the third position (P3), and
wherein the transport unit (2) is configured to form part of a microscopy system (1) and move a microscope slide (60) in the microscopy system (1), preferably in accordance with the method of claim 13.
